# EUROPÄISCHE PATENTSCHRIFT

(11) **EP 2 042 062 B1**
(45) Veröffentlichungstag und Bekanntmachung des Hinweises auf die Patenterteilung: **14.04.2010**
(21) Anmeldenummer: 07117121.9
(22) Anmeldetag: 25.09.2007
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 01.04.2009
(73) Patentinhaber: Schaerer AG, 4528 Zuchwil (CH)
(72) Erfinder: Hostettler, Hans-Ulrich, 3114, Wichtrach (CH)
(74) Vertreter: Scheuzger, Beat Otto

(56) Entgegenhaltungen:
- EP-A- 0 528 758
- EP-A- 1 483 992
- FR-A- 2 562 782

## Beschreibung

Die vorliegende Erfindung bezieht sich auf eine Brüheinrichtung für eine Kaffeemaschine, umfassend einen Brühzylinder mit einer zylindrischen Bohrung und einen oberen Kolben und einen unteren Kolben, durch welche der Brühzylinder zur Bildung einer Brühkammer abschliessbar ist, wobei der Brühzylinder und die Kolben relativ zueinander verschiebbar in einem Rahmen gehalten sind und über eine Antriebseinrichtung antreibbar sind, welche Antriebseinrichtung eine Spindel umfasst, deren beidseitigen Enden im Rahmen drehbar gelagert sind, in welche ein Gewindeteil eingreift, welcher an einem am Brühzylinder angebrachten Mitnahmeteil angeordnet ist, eine Kaffeepulverzuführeinrichtung zum Befüllen der Brühkammer mit Kaffeepulver, und ein Abstreifelement zum Abstreifen des nach dem Brühvorgang aus der Brühkammer durch den unteren Kolben ausgestossenen und auf der Kolbenfläche des unteren Kolbens aufliegenden Kaffeepulverkuchens in einen Auffangbehälter, welches Abstreifelement mechanisch antreibbar ist und eine Abstreiffläche und eine der Abstreiffläche gegenüber liegende rückseitige Fläche aufweist.

Derartige Brüheinrichtungen sind in vielfältiger Weise bekannt und werden sowohl in Haushaltskaffeemaschinen wie auch in Restaurationskaffeemaschinen eingesetzt. Zum Bezug eines Kaffees wird die erforderliche Menge von üblicherweise frisch gemahlenem Kaffeepulver, abhängig davon, welche Art von Kaffee bezogen wird, wie beispielsweise normaler Kaffee, Espressokaffee, Ristrettokaffee usw., in die Brühkammer eingefüllt. Die Brühkammer wird danach verschlossen, wonach heisses Wasser mit dem gewünschten Druck durch die Brühkammer geleitet wird, wobei Kaffee gebrüht wird. Der so frisch gebrühte Kaffee gelangt dann über einen Auslass in das bereit gestellte Gefäss. Die Brühkammer wird danach geöffnet, der darin befindliche Kaffeepulverrest wird aus der Brühkammer ausgeworfen und gelangt in einen Behälter.

Eine derartige Brüheinrichtung ist beispielsweise aus der EPA 0528 758 bekannt. Zum Öffnen und Schliessen der Brühkammer ist eine Spindel angeordnet, die über einen Antriebsmotor drehbar antreibbar ist. Über diese Spindel, die mit einem Gewinde ausgestattet ist, wird der Brühzylinder entlang dieser Spindel verschoben, der Brühzylinder ist hierzu mit einem Mitnahmeteil ausgestattet, der mit einem Gewindeteil versehen ist, welcher in das Gewinde der Spindel eingreift, und welcher die Spindel um einen bestimmten Bereich umschlingt.

Nach dem Brühvorgang für einen Kaffee wird die Brühkammer geöffnet, indem der Brühzylinder mittels der Spindel vom oberen Kolben weg nach unten verschoben wird, wobei der untere Kolben mitgenommen wird. Der untere Kolben stösst dann gegen einen Anschlag und bleibt dort fest stehen, der Brühzylinder wird weiter nach unten verfahren, mit dem still stehenden unteren Kolben wird der Kaffeepulverkuchen aus dem Brühzylinder ausgestossen. Wenn die Kolbenfläche des unteren Kolbens den Rand des Brühzylinders erreicht hat, wird der Kolben zusammen mit dem Brühzylinder nach unten verfahren, während dieses Verfahrweges wird das am Brühzylinder angelenkte Abstreifelement, das sich im Ruhezustand zwischen Brühzylinder und Mitnahmeteil befindet, über einen Kulissenantrieb über den oberen Rand des Brühzylinders und die Kolbenfläche des unteren Kolbens verfahren, wodurch der hier sich befindende Kaffeepulverkuchen abgestreift wird und in einen Auffangbehälter gelangt.

Um eine optimale Funktion dieser Brüheinrichtung erreichen zu können und da die einzelnen Teile aus einem abriebfesten Kunststoff, beispielsweise POM (Polyoxymethylen), im Spritzgussverfahren hergestellt werden, das relativ grosse Toleranzen erfordert, muss zwischen den einzelnen sich gegeneinander bewegenden Teilen ein entsprechendes Spiel vorgesehen sein. Dies bedeutet, dass beim Abstreifen des Kaffeepulverkuchens von der Kolbenoberfläche und dem oberen Rand des Brühzylinder zum Abstreifelement ein Spalt besteht, durch welchen Kaffeepulverreste beim Auswerfen durchschlüpfen können und auf den entsprechenden Flächen liegen bleiben. Beim Zurückschwenken des Abstreifelements können diese Kaffeepulverreste hinter den Brühzylinder auf den Mitnahmeteil befördert werden. In diesem Bereich kann die Kaffeepulvermenge soweit anwachsen, dass das Abstreifelement seine Ruheposition nicht mehr einnehmen kann, da zwischen der Rückwand des Mitnahmeteils und der rückseitigen Fläche des Abstreifelements diese Kaffeepulverreste verklemmt werden. Dieser Kaffeepulverrest kann soweit anwachsen, dass das Abstreifelement beim Schliessen der Brühkammer mit dem oberen Kolben kollidiert, was zu funktionellen Störungen der Brüheinrichtung und sogar zu Beschädigungen führen kann.

Die Aufgabe der Erfindung besteht somit darin, die Einrichtung in diesem Bereich so auszugestalten, dass ein Ansammeln von Kaffeepulverrest vermieden wird, sodass gewährleistet ist, dass das Abstreifelement die Ruhelage einnehmen kann und nicht durch zusammengepresste Kaffeepulverreste daran gehindert wird.

Erfindungsgemäss erfolgt die Lösung dieser Aufgabe dadurch, dass die rückseitige Fläche des Abstreifelements mit einem Vorsprung versehen ist, welcher an dem der Kolbenfläche zugewandten Bereich angeordnet ist und mindestens eine Abweisfläche aufweist, welche bezüglich der Abstreifrichtung geneigt ist.

Mit der Anordnung einer derartigen Abweisfläche kann erreicht werden, dass die Kaffeepulverreste, die sich hinter dem Abstreifelement ansammeln und zwischen Abstreifelement und Rückseite des Mitnahmeteils eingeklemmt werden können, seitlich wegbefördert werden. Dadurch ist gewährleistet, dass das Abstreifelement seine Ruhelage einnehmen kann, eine Kollisionsgefahr mit dem oberen Kolben wird vermieden.

In vorteilhafter Weise ist der Vorsprung mit zwei Abweisflächen ausgestattet, welche so angeordnet sind, dass sie die Form eines Keils bilden. Ueber diese keilförmige Anordnung von zwei Abweisflächen wird erreicht, dass die Kaffeepulverreste auf beide Seiten wegbefördert werden, was die Funktionssicherheit verbessert.

Die der Kolbenfläche benachbarte Seite des Vorsprungs weist in vorteilhafter Weise eine der Kolbenfläche und der Oberfläche des Mitnahmeteils entsprechende Form auf, wodurch gewährleistet ist, dass die auf der Kolbenoberfläche und dem Mitnahmeteil verbleibenden Kaffeepulverreste wegbefördert werden.

Die Abstreiffläche des Abstreifelements ist vorteilhafterweise zylindrisch ausgebildet und umschlingt den Kaffeepulverkuchen, der abgestreift werden soll, um mindestens einen Drittel. Dadurch wird erreicht, dass der abzustreifende Kaffeepulverkuchen möglichst vollständig abgestreift wird.

Eine weitere vorteilhafte Ausgestaltung der Erfindung besteht darin, dass an dem gegen den oberen Kolben gerichteten oberen Bereich des Abstreifelementes ein Nocken angebracht ist, welcher mit einer Anschrägung ausgestattet ist, welche spitzwinklig zur Kolbenachse ausgerichtet ist. Wenn beim Schliessen der Brühkammer sich das Abstreifelement nicht in der hinteren Ruhelage befindet, stösst diese Anschrägung an den oberen Kolben an, wodurch bewirkt wird, dass das Abstreifelement gegen die hintere Ruhelage gedrückt wird und so eine Kollision des Abstreifelements mit dem oberen Kolben vermieden wird.

In vorteilhafter Weise sind/ist der Vorsprung und/oder der Nocken an das Abstreifelement angeformt, was eine kompakte und kostengünstige Herstellung dieses Elements ergibt, was durch Spritzgussformen erreichbar ist.

Eine Ausführungsform der vorliegenden Erfindung wird nachfolgend anhand der beiliegenden Zeichnung beispielhaft näher erläutert.

Es zeigt
Fig. 1 eine Schnittdarstellung einer Brüheinrichtung einer Kaffeemaschine beim Einfüllvorgang des Kaffeepulvers in die Brühkammer;
Fig. 2 eine Schnittdarstellung der Brüheinrichtung mit geschlossener Brühkammer während des Brühvorgangs für einen Kaffee;
Fig. 3 eine Schnittdarstellung der Brüheinrichtung mit geöffneter Brühkammer und durch den unteren Kolben ausgestossenem Kaffeepulverkuchen;
Fig. 4 eine Schnittdarstellung der Brüheinrichtung mit beginnender Abstreifung des Kaffeepulverkuchens durch die Abstreifeinrichtung;
Fig. 5 eine Schnittdarstellung durch die Brüheinrichtung entlang Linie V - V gemäss Fig. 1;
Fig. 6 eine vergrösserte Schnittdarstellung durch den unteren Kolben und das Abstreifelement gemäss Fig. 4; und
Fig. 7 in räumlicher Darstellung die Brüheinrichtung mit dem Abstreifelement in der voll ausgefahrenen Position.

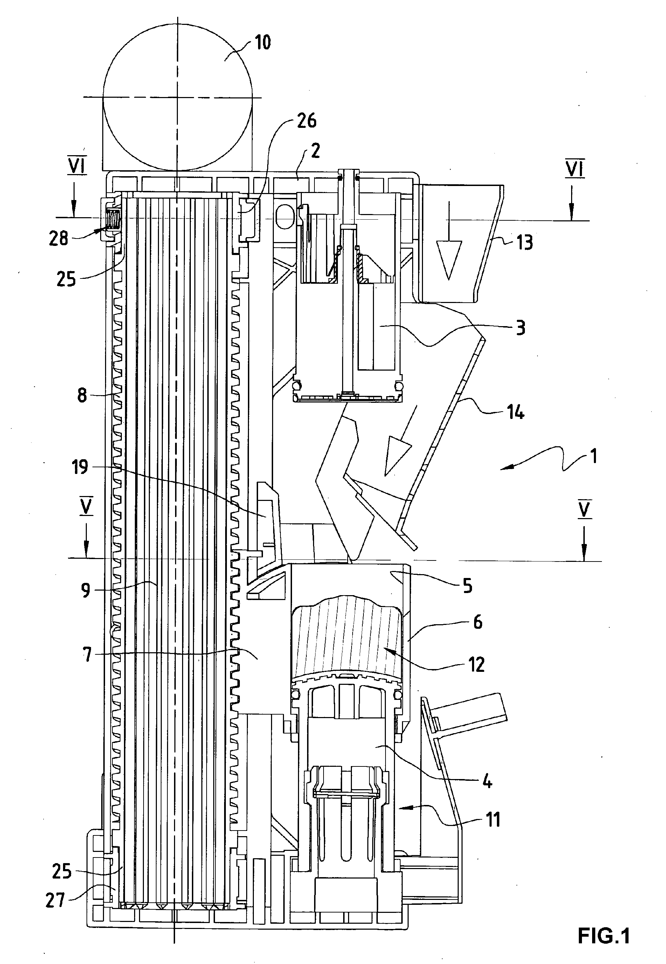

Wie aus den Figuren 1 bis 4 ersichtlich ist, umfasst die Brüheinrichtung 1 einen im Rahmen 2 ortsfest gehaltenen oberen Kolben 3. Dem oberen Kolben 3 axial gegenüberliegend ist ein unterer Kolben 4 angeordnet, der bezüglich des oberen Kolbens 3 axial verschiebbar ist. Dieser untere Kolben 4 ist in einer zylindrischen Bohrung 5 eines Brühzylinders 6 gehalten, welcher Brühzylinder 6 ebenfalls axial verschiebbar ist. Der Brühzylinder 6 ist mit einem Mitnahmeteil 7 ausgestattet, an welchem ein Gewindeteil 7a angebracht ist, welcher Gewindeteil 7a mit einem Gewinde 8 einer drehbar im Rahmen 2 gehaltenen Spindel 9 in Eingriff ist. Diese Spindel 9 weist an den beidseitigen Enden jeweils einen Lagerzapfen 25 auf, die in im Rahmen 2 angebrachten Lagerringen 26 und 27 gleitend drehbar gehalten sind. Im Lagerring 26 ist ein Abstützelement 28 eingesetzt, mit welchem das Spiel zwischen Lagerzapfen 25 und Lagerring 26 aufgehoben wird. Die Spindel 9 ist in bekannter Weise über einen Elektromotor 10 antreibbar, der ebenfalls am Rahmen 2 angebracht ist.

In Fig. 1 ist die Brüheinrichtung 1 in der Füllposition dargestellt. Dies bedeutet, dass sich der untere Kolben 4 in der untersten Position befindet, in welcher er durch die am Rahmen 2 angebrachte Klinkeinrichtung 11 gehalten wird. Diese Position hat der untere Kolben 4 dadurch erreicht, dass der Brühzylinder 6 über die Spindel 9 durch entsprechende Rotation ebenfalls in die unterste Position gebracht worden ist, in welche der untere Kolben 4 mitgenommen worden ist, bis er in die Klinkeinrichtung 11 eingeklinkt ist, danach ist der Brühzylinder 6 durch entsprechendes Verdrehen der Spindel 9 wieder hochgefahren worden, wie dies in Fig. 1 ersichtlich ist, der untere Kolben verblieb hierbei in der untersten Position, der Brühzylinder 6 hat sich somit bezüglich des unteren Kolbens 4 angehoben, wodurch innerhalb des Brühzylinders 6 die nach unten durch den unteren Kolben 4 abgeschlossene Brühkammer 12 gebildet wird. In dieser Füllposition befindet sich das Abstreifelement 19 in seiner Ruheposition über dem Mitnahmeteil 7 und ist somit ausserhalb des Bereichs des Brühzylinders 6, in welchen der obere Kolben 3 zum Schliessen des Brühzylinders 6 eindringt.

In die Brühkammer 12 wird nun das frisch gemahlene Kaffeepulver zugeführt. Dieses Kaffeepulver wird in bekannter Weise in einer Kaffeemühle, die nicht dargestellt ist und die ebenfalls in der entsprechenden Kaffeemaschine untergebracht ist gemahlen, das Pulver gelangt über einen ersten Trichter 13 auf einen schwenkbaren Trichter 14, durch welchen das gemahlene Kaffeepulver in die Brühkammer 12 geleitet wird. Hierbei wird die zugeführte Kaffeepulvermenge in bekannter Weise dosiert, je nachdem, welche Art von Kaffee bezogen werden soll.

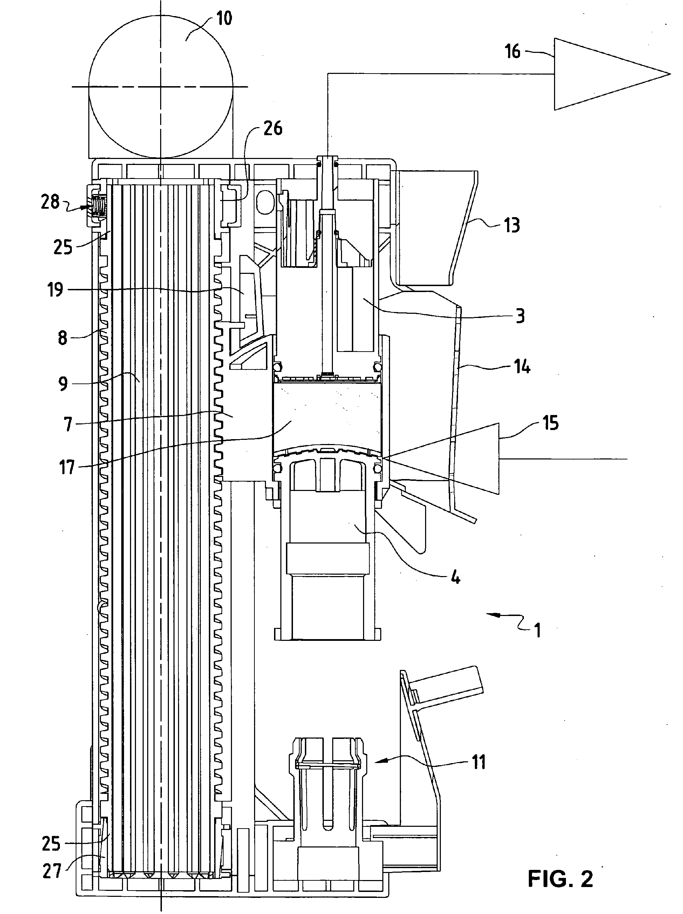

Nach dem Befüllen der Brühkammer 12 mit frisch gemahlenem Kaffeepulver wird die Spindel 9 über den Elektromotor 10 in Rotation versetzt, über den Gewindeteil 7a am Mitnahmeteil 7 wird der Brühzylinder 6 hochgefahren, wobei der untere Kolben 4 über entsprechende Mitnehmer mitgenommen wird. Der Brühzylinder 6 und der untere Kolben 4 werden solange hochgefahren, bis die Brühkammer 12 durch den oberen Kolben 3 verschlossen wird und das sich in der Brühkammer 12 befindende Kaffeepulver gepresst wird. Der sich in Ruheposition befindende Abstreifer 19 befindet sich hierbei zwischen dem oberen Kolben 3 und der Spindel 9. In dieser Position des Brühzylinders 6, die in Fig. 2 dargestellt ist, ist die Brühstellung erreicht. In bekannter Weise kann nun von unten her in die Brühkammer 12 das heisse Wasser zugeführt werden, wie dies durch Pfeil 15 dargestellt ist, das heisse Wasser durchströmt die Brühkammer 12 und das darin sich befindende gemahlene Kaffeepulver und wird über einen Abflusskanal, der in bekannter Weise im oberen Kolben 3 angebracht ist, als gebrühter Kaffee abgeleitet, wie dies durch Pfeil 16 dargestellt ist, und gelangt in bekannter Weise über eine nicht dargestellte Leitung in einen Ausguss der Kaffeemaschine und von dort in das darunter bereit gestellte Gefäss. Zum Brühen des Kaffees wird das in der Brühkammer 12 sich befindende Kaffeepulver zwischen den beiden Kolben 3 und 4 derart komprimiert, dass dieses dem durchströmenden Brühwasser einen Widerstand entgegensetzt, sodass das Brühwasser mit einem Druck von etwa 8 bar durch die Brühkammer 12 gepresst werden muss. Das ausgebrühte Kaffeepulver verbleibt in der Brühkammer 12 und bildet einen Kaffeepulverkuchen, der sehr kompakt und feucht ist.

Wie aus Fig. 2 ersichtlich ist, wird der schwenkbare Trichter 14 beim Hochfahren des Brühzylinders 6 mit dem unteren Kolben 4 weggeschwenkt, hierbei ist dieser schwenkbare Trichter 14 mit einer nicht dargestellten Feder ausgestattet, welche den schwenkbaren Trichter 14 in die in Fig. 1 dargestellte Position zurückdrücken möchte.

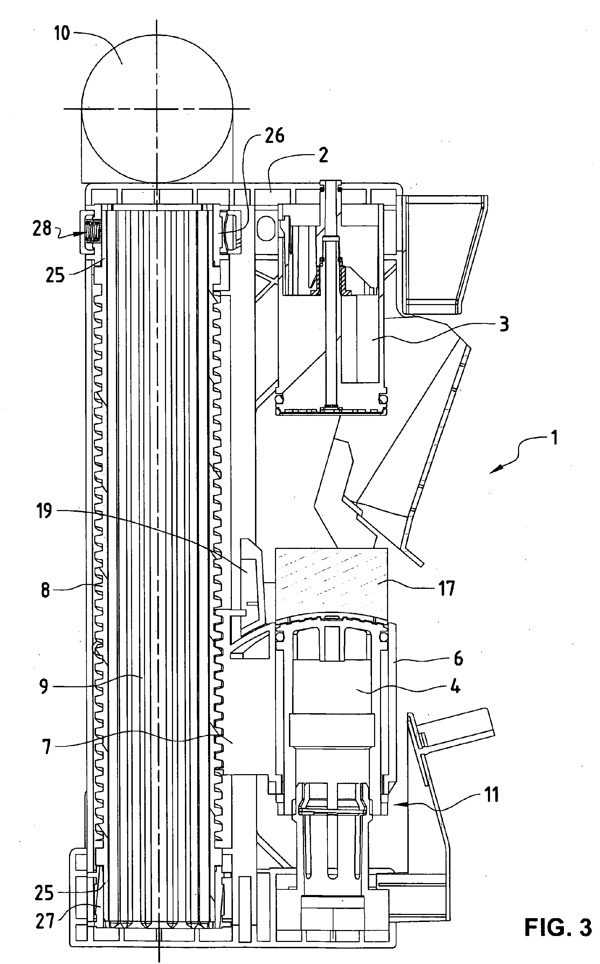

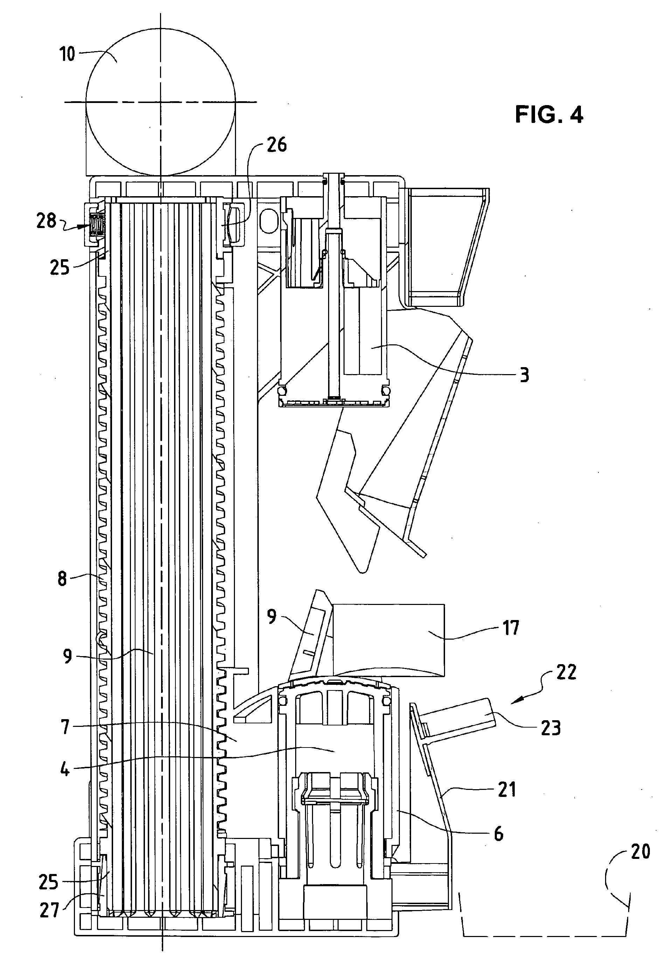

Nach der Durchführung des Brühvorgangs wird die Brühkammer 12 geöffnet, indem der Brühzylinder 6 und der untere Kolben 4 durch entsprechendes Verdrehen der Spindel 9 nach unten gefahren werden, wie dies in Fig. 3 dargestellt ist. Der untere Kolben 4 erreicht hierbei mit seinem unteren Ende die Klinkeinrichtung 11 und stützt sich darauf ab. Der Brühzylinder 6 wird weiter nach unten gefahren, der untere Kolben bleibt stehen, wodurch der Kaffeepulverkuchen 17 aus dem Brühzylinder 6 ausgestossen wird, wie dies in Fig. 3 ersichtlich ist. Wenn der Brühzylinder 6 mit seinem oberen Rand den oberen Rand des unteren Kolbens 4 erreicht hat, liegt der ausgestossene Kaffeepulverkuchen 17 auf der Kolbenfläche 4a des unteren Kolbens 4 auf, und wird der untere Kolben 4 mit dem weiter nach unten verfahrbaren Brühzylinder 6 über entsprechende Anschläge mitgenommen und in die Klinkeinrichtung 11 eingefahren, wie dies in Fig. 4 dargestellt ist. Wenn der Brühzylinder 6 und der untere Kolben 4 in den Bereich der unteren Position gelangen, wird das Abstreifelement 19, welches in bekannter Weise am Brühzylinder 6 angelenkt ist, über eine am Rahmen 2 angebrachte, bekannte nicht dargestellte Kulisse mechanisch betätigt. Hierdurch bewegt sich das Abstreifelement 19 quer über die Kolbenfläche 4a des unteren Kolbens 4, der Kaffeepulverkuchen 17 wird, wie aus Fig. 4 ersichtlich ist, vom unteren Kolben und dem Brühzylinder 6 abgestreift.

Der auszuwerfende Kaffeepulverkuchen 17 gelangt hierbei über eine Rutsche 21, die am Rahmen 2 angebracht ist, in einen nur schematisch dargestellten, in der Kaffeemaschine untergebrachten Behälter 20. An der Rutsche 21 ist ein Teilelement 22 angebracht, das in diesem Ausführungsbeispiel als Klinge 23 ausgebildet ist, mittels welcher der über die Rutsche 21 in den Behälter 20 gelangende Kaffeepulverkuchen 17 in kleinere Stücke zerschnitten wird.

Nach dem Auswerfen des Kaffeepulverkuchens 17 kann der Brühzylinder 6 durch entsprechendes Rotieren der Spindel 9 wieder in die Füllstellung gebracht werden, wie diese in Fig. 1 dargestellt ist, die Brüheinrichtung ist bereit zum Brühen eines weiteren Kaffees. Im ersten Bereich dieses Zurückfahrens des Brühzylinders in die Füllstellung wird das Auswerfelement 19 durch die Kulissenführung von der voll ausgefahrenen Abstreifposition wieder in die Ruheposition zurückgefahren.

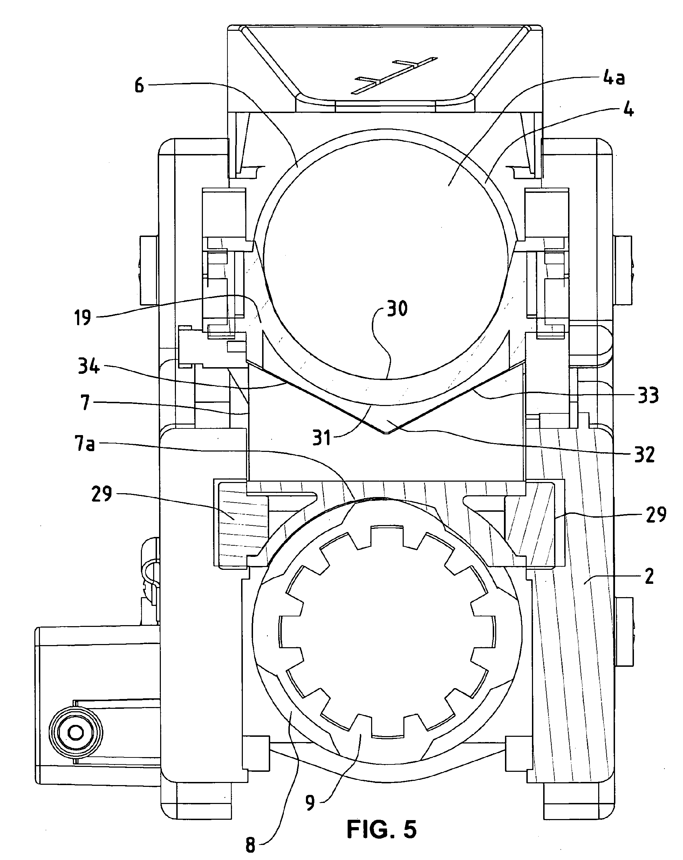

Aus Fig. 5 ist die im Rahmen 2 der Brüheinrichtung 1 angeordnete Spindel 9 ersichtlich, die mit dem Gewinde 8 ausgestattet ist, in welches der Gewindeteil 7a des Mitnahmeteils 7 eingreift. Der Mitnahmeteil 7 ist im Rahmen mittels Längsführungen 29 geführt. Am Mitnahmeteil 7 ist der Brühzylinder 6 angebracht, in welchem der untere Kolben 4 mit der Kolbenfläche 4a angeordnet ist. Zwischen dem Brühzylinder 6 und der Spindel 9 befindet sich das Abstreifelement 19, welches mit einer Abstreiffläche 30 und mit einer der Abstreiffläche 30 gegenüber liegenden rückseitigen Fläche 31 ausgestattet ist. Die Abstreiffläche 30 ist zylindrisch ausgebildet, beim Abstreifen des Kaffeepulverkuchens umschlingt diese Abstreiffläche 30 den Kaffeepulverkuchen, wodurch eine optimale Abstreifung erreicht wird.

An der rückseitigen Fläche 31 des Abstreifelementes 19 ist ein Vorsprung 32 angebracht, welcher an dem der Kolbenfläche 4a zugewandten Bereich des Abstreifelementes 19 angeordnet ist, und welcher mit zwei Abweisflächen 33 und 34 ausgestattet ist, die so angeordnet sind, dass sie die Form eines Keils bilden.

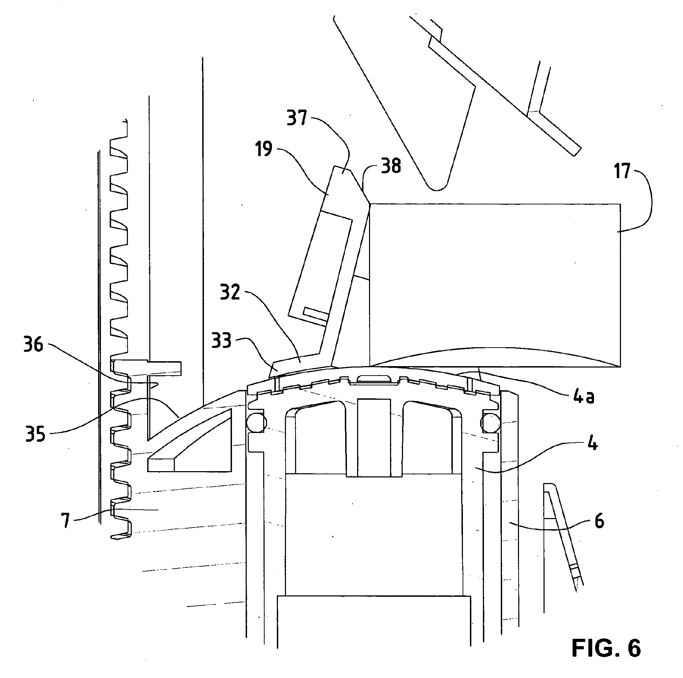

Aus Fig. 6 ist ersichtlich, wie das Abstreifelement 19 den Kaffeepulverkuchen von der Kolbenfläche 4a des unteren Kolbens 4, der im Brühzylinder 6 angeordnet ist, abstreift. Das Abstreifelement 19 folgt der gewölbten Kolbenfläche 4a, wobei zwischen Unterseite des Abstreifelements 19 und der Kolbenfläche 4a ein Spalt vorhanden ist. Die der Kolbenfläche 4a benachbarte Seite des Abstreifelements 19 und des Vorsprungs 32 weist eine der gewölbten Kolbenfläche 4a und der Oberfläche 35 des Mitnahmeteils 7 entsprechende Form auf.

Durch den Spalt, der zwischen der Kolbenfläche 4a und dem Abstreifelement 19 vorhanden sein muss, kann auf der Kolbenfläche 4a beim Abstreifen des Kaffeepulverkuchens 17 durch das Abstreifelement 19 ein Kaffeepulverrest liegen bleiben. Beim Zurückschwenken des Abstreifelementes 19 kann dieser Kaffeepulverrest mit dem Abstreifer 19 mitgenommen werden und gelangt auf die Oberfläche 35 des Mitnahmeteils 7. Nach einer grösseren Anzahl von Kaffeebezügen kann sich diese Kaffeepulvermenge auf dieser Oberfläche 35 soweit vergrössern, dass diese zwischen der Wandung 36 des Mitnahmeteils 7 und dem Abstreifelement 19 eingepresst wird. Dieses verpresste Kaffeepulver kann soweit anwachsen, dass das Abstreifelement 19 nicht mehr in die hintere Ruhelage gelangen kann, beim Schliessen des Brühzylinders in die Brühstellung, wie dies in Fig. 2 ersichtlich ist, könnte somit das Abstreifelement 19 mit seinem oberen Rand am oberen Kolben 3 anstossen, was zumindest eine Funktionsstörung zur Folge hätte. Um das Ansammeln und Zusammenpressen von Kaffeepulver in diesem Bereich zu vermeiden, ist am Abstreifelement 19, wie vorgängig beschrieben worden ist, der Vorsprung 32 angebracht, der mit zwei Abweisflächen 33 und 34 ausgestattet ist, die einen Keil bilden, wie dies insbesondere in Fig. 5 ersichtlich ist. Mit diesem Keil wird erreicht, dass das auf der Oberfläche 35 sich ansammelnde Kaffeepulver seitlich wegbefördert wird, ein Verpressen des Kaffeepulvers in diesem Bereich, welches das in die Ruhelage Fahren des Abstreifelementes verhindern würde, wird somit vermieden.

Am oberen Bereich des Abstreifelementes 19, das gegen den oberen Kolben 3 gerichtet ist (Fig. 1) ist ein Nocken 37 angebracht, welcher mit einer Anschrägung 38 ausgestattet ist, welche spitzwinklig zur Kolbenachse ausgerichtet ist. Wenn beim Schliessen des Brühzylinders 6, d.h. beim Hochfahren des Brühzylinder 6 gegen den oberen Kolben 3 hin (siehe Fig. 2) das Abstreifelement 19 trotz dem Vorsprung 32 mit den Abweisflächen 33 und 34 nicht vollständig in die Ruhelage gelangen konnte, stösst gegebenenfalls das Abstreifelement mit der Anschrägung 38 des Nockens 37 an der unteren Randseite des oberen Kolbens 3 an und wird in die Ruhelage gedrückt, eine Kollision zwischen Abstreifelement 19 und oberen Kolben 3 wird dadurch ausgeschlossen.

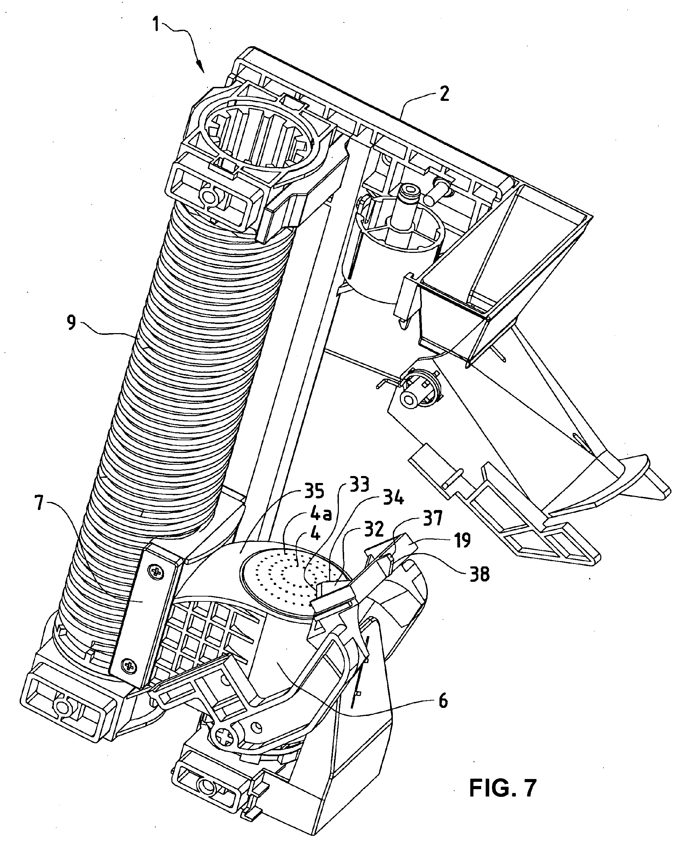

In Fig. 7 ist die erfindungsgemässe Brüheinrichtung räumlich dargestellt, wobei die vordere Seite des Rahmens 2 aus Uebersichtlichkeitsgründen weggelassen wurde. Hierbei ist die im Rahmen 2 gelagerte Spindel 9 ersichtlich, mittels welcher der Mitnahmeteil 7 längs verschiebbar ist. Am Mitnahmeteil 7 ist der Brühzylinder 6 befestigt, in welchen der untere Kolben 4 eingesetzt ist. Aus Fig. 7 ist auch ersichtlich, wie das Abstreifelement 19 am Brühzylinder 6 schwenkbar angelenkt ist, sodass das Abstreifelement 19 über die Kolbenfläche 4a und die Oberfläche 35 des Mitnahmeteils 7 verfahren kann, wobei Kolbenfläche 4a und Oberfläche 35 entsprechend gewölbt sind. Am Abstreifelement 19 ist der Vorsprung 32 mit seinen beiden Abweisflächen 33 und 34 angeordnet, mit welchen das auf der Oberfläche 35 des Mitnahmeteils 7 sich ansammelnde Kaffeepulver seitlich wegbefördert werden kann. Ebenfalls ersichtlich ist der Nocken 37, der mit der Anschrägung 38 ausgestattet ist, welcher Nocken 37 am Abstreifelement 19 angebracht ist. Wie ebenfalls aus Fig. 7 gut ersichtlich ist, sind der Vorsprung 32 und der Nocken 37 an das Abstreifelement 19 beim Herstellungsverfahren dieses Abstreifelementes 19 durch Spritzgiessen angeformt.

Mit dieser Einrichtung wird erreicht, dass das Abstreifelement 19 in jedem Fall in die Ruhelage zurückfahren kann, Kaffeepulverreste, die zwischen dem Abstreifelement 19 und der Wandung 36 des Mitnahmeteils 7 sich ansammeln können, werden seitlich wegbefördert.

## Patentansprüche

1. Brüheinrichtung für eine Kaffeemaschine, umfassend einen Brühzylinder (6) mit einer zylindrischen Bohrung und einen oberen Kolben (3) und einen unteren Kolben (4), durch welche der Brühzylinder (6) zur Bildung einer Brühkammer (12) abschliessbar ist, wobei der Brühzylinder (6) und die Kolben (3, 4) relativ zueinander verschiebbar in einem Rahmen (2) gehalten sind und über eine Antriebseinrichtung (9, 10) antreibbar sind, welche Antriebseinrichtung eine Spindel (9) umfasst, deren beidseitigen Enden im Rahmen (2) drehbar gelagert sind, in welche ein Gewindeteil (7a) eingreift, welcher an einem am unteren Kolben (4) angebrachten Mitnahmeteil (7) angeordnet ist, eine Kaffeepulverzuführeinrichtung zum Befüllen der Brühkammer (12) mit Kaffeepulver, und ein Abstreifelement (19) zum Abstreifen des nach dem Brühvorgang aus der Brühkammer (12) durch den unteren Kolben (4) ausgestossenen und auf der Kolbenfläche (4a) des unteren Kolbens (4) aufliegenden Kaffeepulverkuchens (17) in einen Auffangbehälter (20), welches Abstreifelement (19) mechanisch antreibbar ist und eine Abstreiffläche (30) und eine der Abstreiffläche (30) gegenüberliegende rückseitige Fläche (31) aufweist, **dadurch gekennzeichnet, dass** die rückseitige Fläche (31) des Abstreifelements (19) mit einem Vorsprung (32) versehen ist, welcher an dem der Kolbenfläche (4a) zugewandten Bereich angeordnet ist und mindestens eine Abweisfläche (33, 34) aufweist, welche bezüglich der Abstreifrichtung geneigt ist.

2. Brüheinrichtung nach Anspruch 1, **dadurch gekennzeichnet, dass** der Vorsprung (32) mit zwei Abweisflächen (33, 34) ausgestattet ist, welche so angeordnet sind, dass sie die Form eines Keils bilden.

3. Brüheinrichtung nach Anspruch 1 oder 2, **dadurch gekennzeichnet, dass** die der Kolbenfläche (4a) benachbarte Seite des Vorsprungs (32) eine der Kolbenfläche (4a) und der Oberfläche (35) des Mitnahmeteils (7) entsprechende Form aufweist.

4. Brüheinrichtung nach einem der Ansprüche 1 bis 3, **dadurch gekennzeichnet, dass** die Abstreiffläche (30) zylindrisch ausgebildet ist und den Kaffeepulverkuchen (17) um mindestens einen Drittel umschlingt.

5. Brüheinrichtung nach einem der Ansprüche 1 bis 4, **dadurch gekennzeichnet, dass** an dem gegen den oberen Kolben (3) gerichteten oberen Bereich des Abstreifelements (19) ein Nocken (37) angebracht ist, welcher mit einer Anschrägung (38) ausgestattet ist, welche spitzwinklig zur Kolbenachse ausgerichtet ist.

6. Brüheinrichtung nach einem der Ansprüche 1 bis 5, **dadurch gekennzeichnet, dass** der Vorsprung (32) und/oder der Nocken (37) an das Abstreifelement (19) angeformt sind/ist.

## Claims

1. Brewing device for a coffee machine, comprising a brewing cylinder (6) with a cylindrical bore and an upper piston (3) and a lower piston (4), by means of which pistons the brewing cylinder (6) is able to be closed off to form a brewing chamber (12), the brewing cylinder (6) and the pistons (3, 4) being held in a frame (2) in a way displaceable relative to one another and being drivable via a drive device (9, 10), which drive device comprises a spindle (9), the two ends of which are borne in a rotatable way in the frame (2), in which a threaded part (7a) engages, which is disposed on an entrainment part (7) installed on the lower piston (4), a coffee powder supply device for filling the brewing chamber (12) with coffee powder, and a stripping element (19) for stripping of the coffee powder cake (17), ejected from the brewing chamber (12) by the lower piston (4) after the brewing operation and resting on the piston surface (4a) of the lower piston (4), into a collection container (20), which stripping element (19) is mechanically drivable and has a stripping surface (30) and a back side surface (31) opposite the stripping surface (30), **characterised in that** the back side surface (31) of the stripping element (19) is provided with a projection (32), which is disposed on the region turned toward the piston surface (4a) and has at least one rejection surface (33, 34), which is inclined with respect to the stripping direction.

2. Brewing device according to claim 1, **characterised in that** the projection (32) is provided with two rejection surfaces (33, 34), which are disposed such that they form the shape of a wedge.

3. Brewing device according to claim 1 or 2, **characterised in that** the side of the projection (32) adjacent to the piston surface (4a) has a shape corresponding to the piston surface (4a) and the surface (35) of the entrainment part (7).

4. Brewing device according to one of the claims 1 to 3, **characterised in that** the stripping surface (30) is of cylindrical design and wraps around the coffee powder cake (17) by at least one third.

5. Brewing device according to one of the claims 1 to 4, **characterised in that** provided on the upper region of the stripping element (19) directed against the upper piston (3) is a protrusion (37), which is provided with a beveling (38), which is aligned in an acute-angled way with respect to the piston axis.

6. Brewing device according to one of the claims 1 to 5, **characterised in that** the projection (32) and/or the protrusion (37) is/are integral with the stripping element (19).

## Revendications

1. Dispositif infuseur pour une machine à café, comprenant un cylindre infuseur (6) avec un perçage central et un piston supérieur (3) et un piston inférieur (4) qui permettent de fermer le cylindre infuseur (6) pour la formation d'une chambre d'infusion (12), le cylindre infuseur (6) et les pistons (3, 4) étant maintenus mobiles de manière relative entre eux dans un cadre (2) et sont entraînés par un dispositif d'entraînement (9, 10), dispositif d'entraînement comprenant une broche (9) dont les deux extrémités sont logées rotatives dans le cadre (2) et dans lesquelles s'engage une partie filetée (7a) qui est disposée sur une partie d'entraînement (7) placée sur le piston inférieur (4), comprenant un dispositif d'amenée de poudre de café pour le remplissage de la chambre d'infusion (12) avec de la poudre de café et un élément de raclage (19) pour le raclage de la galette de poudre de café (17) se trouvant sur la surface de piston (4a) du piston inférieur (4) et éjectée après la procédure d'infusion hors de la chambre d'infusion (12) par le piston inférieur (4) dans un récipient de récupération (20), élément de raclage (19) qui est entraîné mécaniquement et présente une surface de raclage (30) et une surface arrière opposée à la surface de raclage (30), **caractérisé en ce que** la surface arrière (31) de l'élément de raclage (19) est munie d'une saillie (32) qui est disposée sur la zone tournée vers la surface de piston (4a) et présente au moins une surface de déflection (33, 34) qui est inclinée par rapport à la direction de raclage.

2. Dispositif infuseur selon la revendication 1, **caractérisé en ce que** la saillie (32) est munie de deux surfaces de déflection (33, 34) qui sont disposés de manière à forme une clavette.

3. Dispositif selon la revendication 1 ou 2, **caractérisé en ce que** la face de la saille (32), proche de la surface de piston (4a) présente une forme correspondante à la surface de piston (4a) et à la surface supérieure (35) de la pièce d'entraînement (7).

4. Dispositif selon l'une des revendications 1 à 3, **caractérisé en ce que** la surface de raclage (30) est de forme cylindrique et entoure la galette de café moulu (17) d'au moins un tiers.

5. Dispositif selon l'une des revendications 1 à 4, **caractérisé en ce que** sur la zone supérieure de l'élément de raclage (19), dirigée en direction du piston supérieur (3), il est disposé une came (37) qui est munie d'un chanfrein (38) orientée en angle aigu par rapport à l'axe de piston.

6. Dispositif infuseur selon l'une des revendications 1 à 5, **caractérisé en ce que** la saillie (32) et/ou la came (37) sont moulées sur l'élément de raclage (19).
